# EUROPEAN PATENT SPECIFICATION

(11) **EP 1 486 386 B1**
(45) Date of publication and mention of the grant of the patent: **15.04.2009**
(21) Application number: 04013676.4
(22) Date of filing: 09.06.2004
(51) Int. Cl.: B60R 25/00, B60R 25/02

(54) **Electrical steering lock device for an automotive vehicle and related method**
Elektrischer Lenksperre für ein Kraftfahrzeug und Verfahren hierfür
Dispositif de blocage du volant pour un véhicule et son procédé

(30) Priority: 13.06.2003 JP 2003169794
(43) Date of publication of application: 15.12.2004
(73) Proprietor: ALPHA CORPORATION, Yokohama-shi, Kanagawa-ken (JP); NISSAN MOTOR CO., LTD., Yokohama-shi Kanagawa-ken (JP)
(72) Inventor: Watanuki, Yoshio, Ebina-shi, KAnagawa-ken (JP); Yoshida, Ryuichi, Hadano-shi, Kanagawa-ken (JP); Konii, Katsuji, Yokohama-shi, Kanagawa-ken (JP)
(74) Representative: Grünecker, Kinkeldey, Stockmair & Schwanhäusser Anwaltssozietät

(56) References cited:
- US-A- 3 553 987
- US-A1- 2002 069 683
- US-A1- 2002 088 257
- US-A1- 2003 067 216

## Description

The present invention relates to an electrical steering lock device for anti-theft of a vehicle.

US 2002/0088257 A1, which is regarded as closest prior art, also discloses an electrical steering lock device comprising a lock shaft operative to protrude into and retract from a lock groove formed on a steering shaft. The lock shaft assumes a protruding position to engage with the lock groove, for blocking rotation of the steering shaft, while assuming a retracting position to disengage from the lock groove for unlocking rotation of the steering shaft. The device further comprises a drive member, which includes a cam having a cam surface with a contour shape to allow the lock shaft to move at a first speed, at which the lock shaft move outside the lock groove.

US 2002/0069683 A1 refers to a steering wheel lock. The disclosed steering wheel is adapted to lock a steering wheel shaft in a steering wheel column by the engagement of a tooth of a locking pin in a complemnetary recess or notch.

An electrical steering lock device, disclosed in Japanese Patent Provisional Publication No. 2002-205622, is arranged to render a lock shaft, adapted to protrude and retract in linkage with an electric motor, engageable with and disengageable from a steering shaft to lock and unlock rotation of the steering shaft.

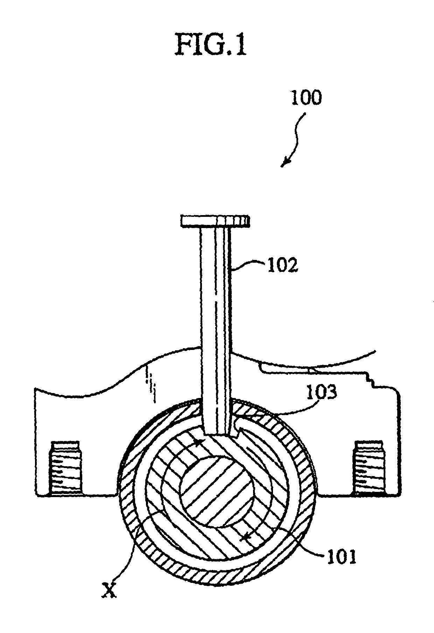

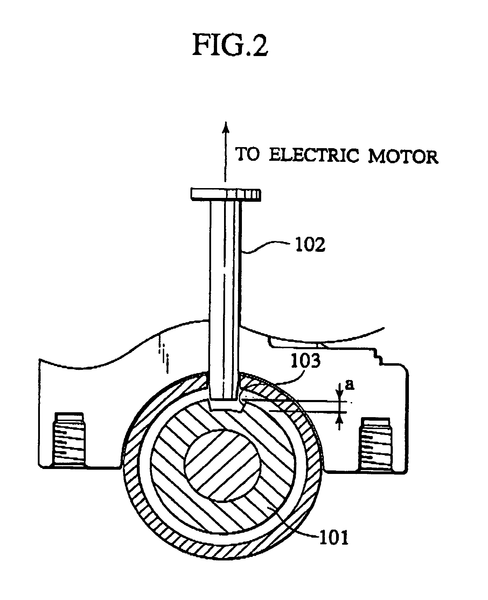

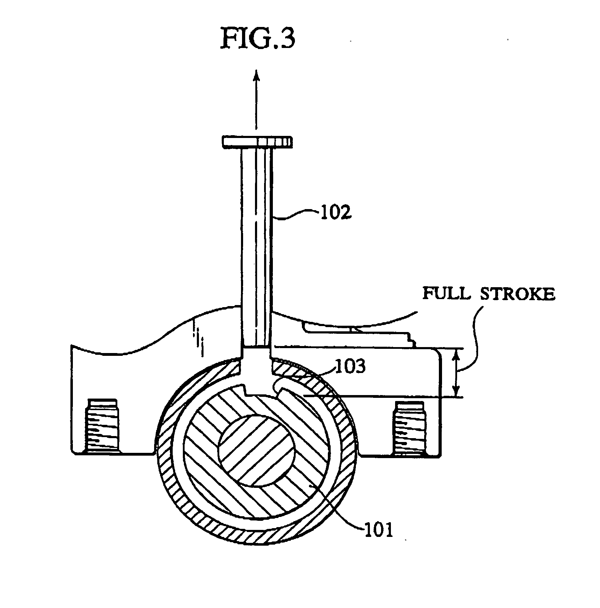

FIGS. 1 and 2 show how a steering shaft 101 is unlocked from a locked condition to an unlocked condition in an electrical steering lock device 100 of the type mentioned above. Under such a locked condition of the steering shaft 101 as shown in FIG. 1, a wall surface of a lock groove 103 is held in strongly pressured contact with the lock shaft 102 due to a restoring force X applied to the steering shaft 101 resulting from frictional resistance between tires and road surface. For this reason, during a process in which the steering shaft 101 is unlocked, the lock shaft 102 is applied with increased load when the lock shaft 102 is moved from the lock groove 103 (in a way as shown in FIG 1→ FIG. 2), whereas no load is applied to the lock shaft 102 after the lock shaft 102 has disengaged from the lock groove 103 (in a way as shown in FIG 2→FIG 3).

As a result, the lock shaft 102, which protrudes and retracts upon receipt of a fixed drive force from the electric motor, undergoes an issue with an inability of disengaging from the lock groove 103 depending upon a magnitude of load being applied.

The present invention has been completed with the above issue in mind and has an object to provide an electrical steering lock device, that is able to reliably disengage a lock shaft from a lock groove.

The above, and other objectives of the invention, are achieved by an electrical steering lock device according to claim 1. Preferred embodiments are claimed in the dependent claims.
FIG. 1 is a view illustrating a locked condition of a steering shaft in an electrical steering lock device of a state-of-the art.
FIG. 2 is a view illustrating a status in a mid-course wherein the steering shaft is progressively unlocked in the electrical steering lock device shown in FIG 1.
FIG. 3 is a view illustrating an unlocked condition of the steering shaft in the electrical steering lock device shown in FIG. 1.
FIG 4 is a front view illustrating an electrical steering lock.
FIG. 5 is a schematic cross sectional view showing an essential part of the electrical steering lock device shown in FIG. 4, with a steering shaft being shown in a locked condition.
FIG 6 is a schematic cross sectional view showing the essential part of the electrical steering lock device shown in FIG 4, with the steering shaft being shown in a midway to be moved in an unlocked condition.
FIG. 7 is a schematic cross sectional view showing the essential part of the electrical steering lock device shown in FIG. 4, with the steering shaft being shown in the unlocked condition.
FIG. 8 is a cross sectional view taken on line SA-SA in FIG. 4 and showing the steering shaft remaining in the locked condition like in FIG 2.
FIG 9 is a cross sectional view taken on line SA-SA in FIG. 4 and showing the steering shaft remaining in the locked condition of like in FIG. 4.
FIG. 10 is a cross sectional view taken on line SA-SA in FIG. 4 and showing a condition where a drive motor encounters erroneous operation.
FIG. 11 is a cam displacement diagram showing the relationship between a rotational angle of a cam and a cam follower (lock shaft).
FIG. 12 is a front view illustrating an electrical steering lock device of the present invention.
FIGS. 13a - 13g are an enlarged view of a plate cam of the electrical steering lock device shown in FIG. 12.
FIG. 14 is a cam displacement diagram showing the relationship between a rotational angle of a cam and a cam follower (lock shaft) in the electrical steering lock device of the present invention.

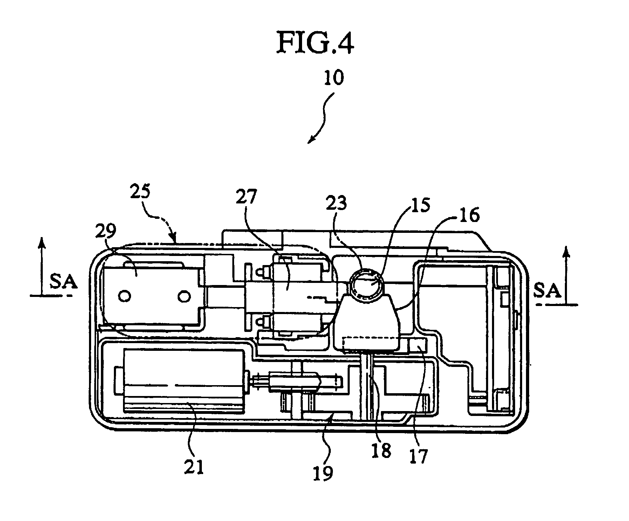

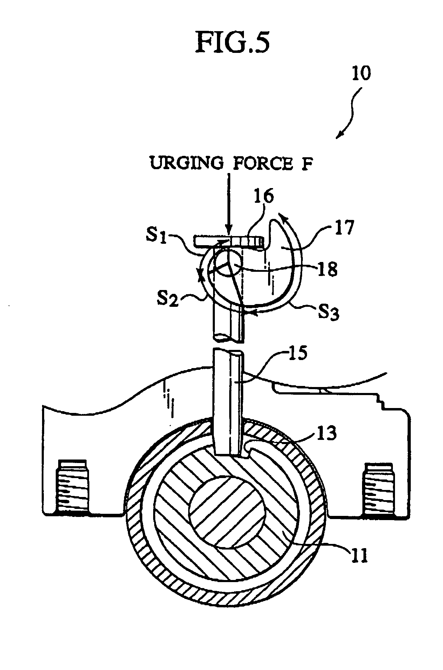

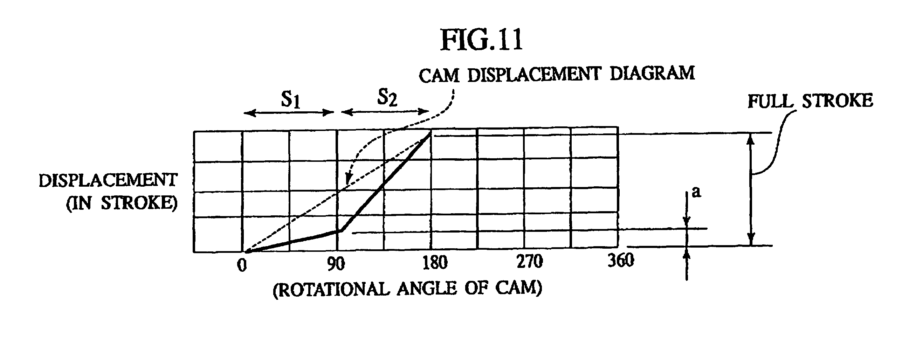

An electrical steering lock device is described below in connection with FIGS. 4 to 11. FIGS. 5 to 7 are schematic cross sectional views illustrating essential parts of the electrical steering lock device.

As shown in FIGS. 5 to 7, the steering lock device 10 has a fundamental structure that is comprised of a lock shaft 15, serving as a "cam follower", which is operative to protrude into or retract from a lock groove 13 formed on a steering shaft 11, a plate cam 17 serving as a "drive member" for operating the lock shaft 15 for protruding and retracting movements, and a drive motor (designated at reference numeral 21 in FIG. 4), serving as a drive device which is not shown, that is connected to the plate cam 17 through a gear reduction mechanism (designated at reference numeral 19 in FIG. 4), which is not shown.

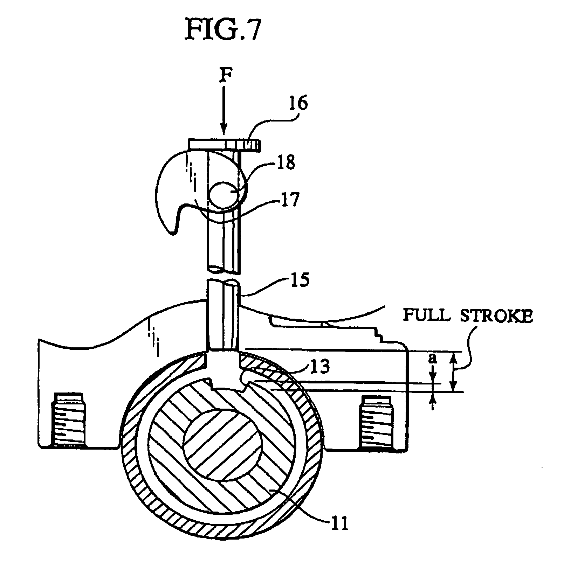

The lock shaft 15 is operative to assume a protruding position, as shown in FIG. 5, in which the lock shaft 15 is placed inside the lock groove 13 for blocking rotation of the steering shaft 11 and a retracting position, as shown in FIG. 7, in which the lock shaft 15 is dislocated outside the lock groove 13 for thereby unlocking rotation of the steering shaft 11.

Formed on the lock shaft 15, serving as the cam follower, is a head portion that is formed with a plate-like contact element 16. Held in abutting engagement with the contact element 16 of the lock shaft 15 at a retracting side (shown at an upper area of FIGS. 5 to 7) is a compression spring (designated by reference numeral 23 in FIG. 4), and held in abutting engagement with the contact element 16 at a protruding side (shown at a lower area in FIGS. 5 to 7) is the plate cam 17 that serves as the drive member. This allows the lock shaft 15 to be applied with urging force F at all times from the retracting side toward the protruding side, while the lock shaft 15 is made operative to move in protruding or retracting directions accompanied by rotation of the plate cam 17 that is placed opposite to the compression spring.

The plate cam 17 with a contoured profile that is determined such that the lock shaft 15 protrudes and retracts at differing speeds; that is, a first speed V1, occurring when the lock shaft 15 moves from inside the lock groove 13, and a second speed V2 at which the lock shaft 15 moves in an area outside the lock groove 13, with the first speed being set to be slower than the second speed. That is, a vorticosely-contoured profile of the plate-like cam 17 formed about a center of a rotary shaft 18 is so determined as to allow an area S1 [with a rotational angle in a range from 0° (at a stroke of 0) to 90° (at a stroke of a)], corresponding to the first speed V1, to be set in a decreased divergence angle while an area S2 [with a rotational angle in a range from 90° (at the stroke of a) to 180° (at a full stroke)] corresponding to the second speed V2 has an increased divergence angle. Also, the present invention has no object on a contoured profile in an area S3 beyond the full stroke.

With the electrical steering lock device 10 of the first embodiment with such a structure, since a traveling speed (first speed V1) at which the lock shaft 15 travels in the lock groove 13 is set to be slow, the lock shaft 15 can be escaped from the lock groove 13 toward the outside thereof with increased torque. This results in a capability of the lock shaft 15 being disengaged from the lock groove 13 without causing the electric motor 21 to be largely sized. When this takes place, the second speed V2 is determined to be higher than the first speed V1, resulting in no probability of the occurrence in delay in an unlocking time.

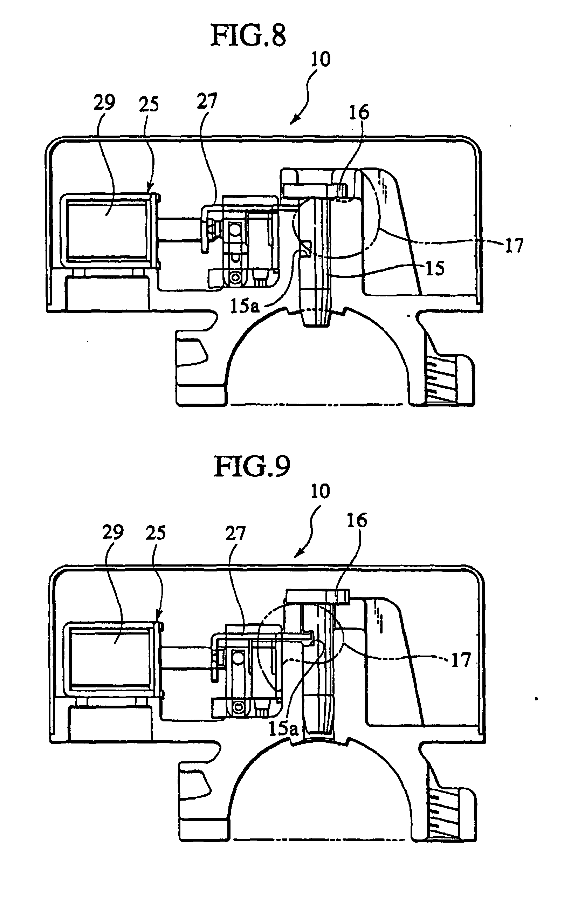

Also, the electrical steering lock device 10 of the first embodiment includes a steering-lock prevention device 25. Hereunder, the steering-lock prevention device is described with reference to FIG. 4 and FIGS. 8 to 10. FIG. 4 is a front view illustrating the electric steering lock device and FIGS. 8 to 10 are cross sectional views taken on line SA-SA.

The steering-lock prevention device 25 serves to prevent the steering shaft 11 from a danger of unintentional lock during traveling of a vehicle and operates to preclude the lock shaft 15, urged by the spring 23, from moving in a protruding direction to lock the steering shaft 11 in an event that the drive motor 21 erroneously operates to suddenly rotate the plate cam 17 or in an event that the lock shaft 15 is suddenly dropped out from the plate cam 17 due to strenuous vibrations.

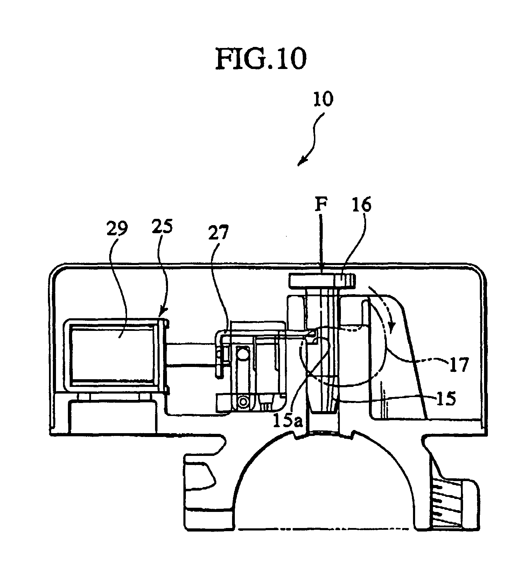

The steering-lock prevention device 25 operates such that under a condition where the solenoid 29 remains in an ON-state, the lock plate 27 protrudes into an engaging concave portion 15a and is located therein as shown in FIG. 9 to restrict protruding and retracting movements of the lock shaft 15. As a result, even if the motor is erroneously operated, as shown in FIG. 10, no danger is caused for the steering shaft to be locked during traveling of the vehicle. On the contrary, if the solenoid 29 remains in an OFF-state, as shown in FIG. 8, the lock plate 27 is returned to a retracted position by the action of a return spring, not shown, disposed in the solenoid 29, permitting the lock shaft 15 to operate for protruding and retracting movements.

### 〈Operation〉

A sequence of operation of the electrical steering lock device with such a structure is described.

### Vehicle Parking Condition (UnderSteering-Lock Condition)

Initially during parking of the vehicle, the lock shaft 15 of the electrical steering lock device 10 assumes the protruding position under which rotation of the steering lock shaft 11 is blocked. This allows the vehicle to be burglar-proofed.

### Before Engine Start-up (Under Steering-Unlock Condition)

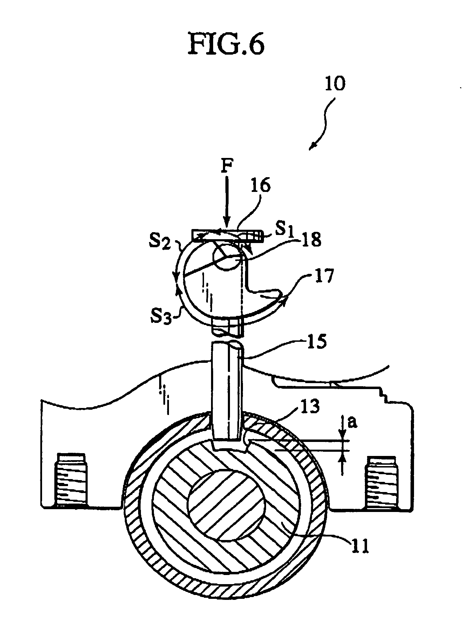

Next, before engine starts up, if a switch, not shown, located in the vicinity of a driver's seat is pressed, the drive motor 21 of the electrical steering lock device 10 is actuated to shift the lock shaft 15 from the protruding position toward the retracting position in a sequence shown in FIG. 5→FIG 6→FIG 7. This allows the steering lock shaft 11 to be unlocked.

As the lock shaft 15 is moved to the retracting position, the solenoid 29 of the steering-lock prevention device 25 is turned on as shown in FIG 9 to cause the lock plate 27 to enter the engaging concave portion 15a of the lock shaft 15, thereby preventing a danger of the steering shaft 11 being suddenly locked. Under the unlocked condition of the steering shaft 11, the vehicle enters a condition available to drive the vehicle, enabling start-up of the engine.

### During Traveling Of Vehicle (Under Preventive Condition For Unintentional Steering-Lock)

During traveling of the vehicle, due to the operation of the steering-lock prevention device 25 of the steering lock device set forth above, the lock shaft 15 is maintained in the retracting position. This prevents the steering shaft 11 from being unintentionally locked during traveling of the vehicle.

### During Engine Stop (Release of Steering-Lock Preventive Condition)

As the engine is stopped to enter ACC, under a condition where the steering-lock preventive condition shown in FIG 9, the solenoid 29 is turned off and the lock plate 27 disengages from the engaging concave portion 15a of the lock shaft 15. This allows the steering-lock to be enabled.

### During Parking of Vehicle (During Steering-Lock Step)

Under such a condition, if the switch, not shown, of the electrical steering lock device 10 is pressed again, the drive motor 21 is operated and the lock shaft 11 enters the lock groove 13 in a sequence as shown in FIG 7→FIG 6→ FIG. 5. This allows the steering shaft 11 to be locked, resulting in a condition where the vehicle is burglar-proofed.

### 〈Effects〉

Here, with the electrical steering lock device 10, since the protruding and retracting speeds at which the lock shaft 15 moves are determined such that during unlocking process (in the sequence shown in FIG. 5→FIG. 6→FIG. 7) wherein the steering shaft 11 is switched from the locked condition to the unlocked condition, the first speed V1 associated with the inside of the lock groove 13 is lower than the second speed V2 associated with the outside of the lock groove 13, the lock shaft 15 is enabled to escape from the inside of the lock groove 13 to the outside of the lock groove 13 with increased torque.

Thus, with the electrical steering lock device 10 of the first embodiment, the lock shaft 15 is enabled to reliably disengage from the lock groove 13 without causing the drive motor 21 from being largely sized. Also, when this takes place, since the second speed V2 is set to be higher than the first speed V1, no delay occurs in unlocking time.

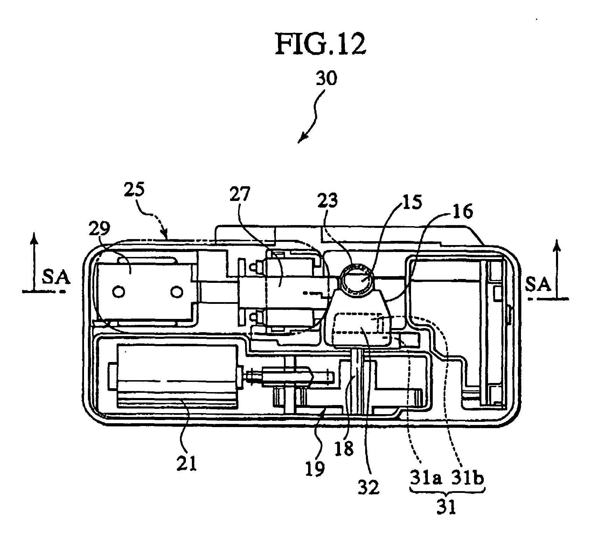

FIGS. 12 to 14 show an electrical steering lock device embodiment of the present invention. Also, the same component parts as those of the Figs. 1-11 bear like reference numerals and description of a structure and operation as well as effects is omitted.

The steeringlock device 30 of the present invention mainly differs from the steering lock in FIG. 4. in two points described below.

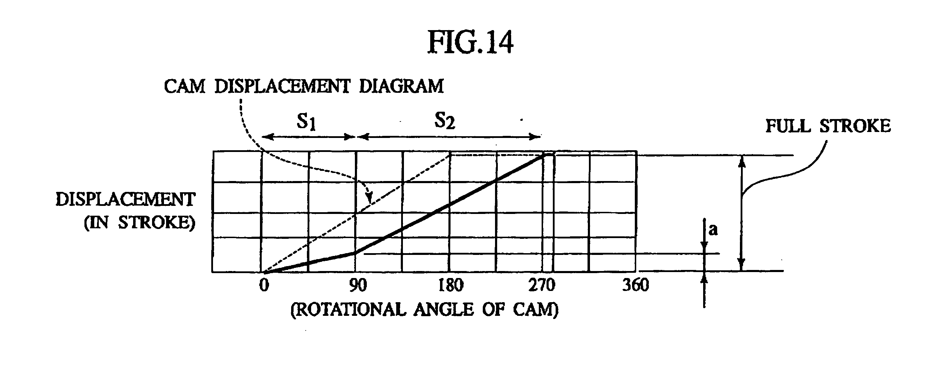

First, as shown in FIG. 14, the plate cam 31 is set to have a contoured profile by which the lock shaft 15 is caused to move in a full stroke at a rotational angle of 270° and differs from the first embodiment in that the area S2 corresponding to the second speed V2 is set to have a rotational angle in a range between 90° and 270°.

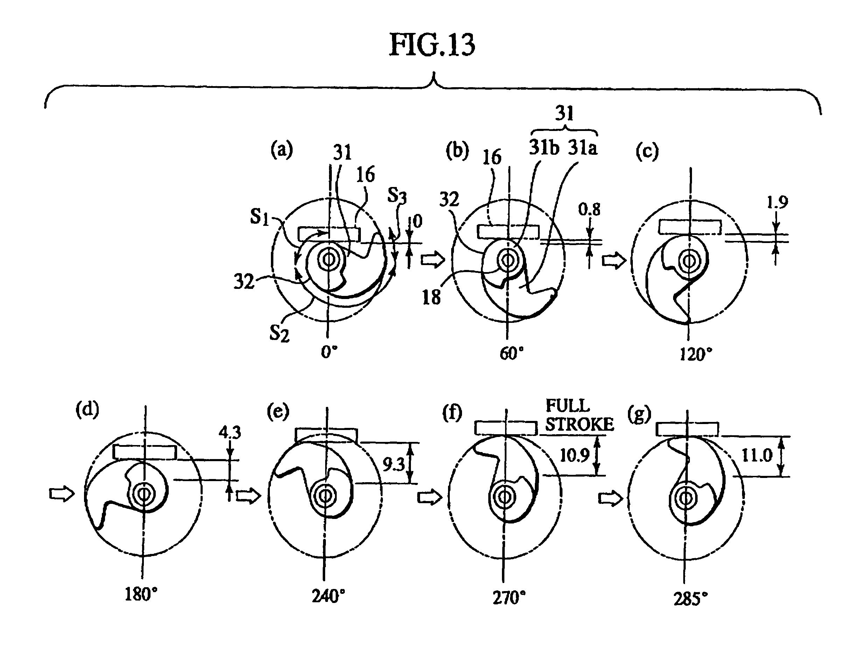

Secondly, the electrical steering lock device 30 differs from the first embodiment in that as shown in FIGS. 12 and 13a - g, the surface area of the sliding surface 32 between the plate cam 31 and the cam follower 15 includes the surface area S1, associated with the first speed V1, and the surface area S2 associated with the second speed V2, which is narrower than the surface area S1. More particularly, the plate cam 31, formed by overlapping a first plate segment 31a and a second plate segment 31b, which have different contoured shapes, allows the surface area of the sliding surface 32 of the plate cam 31 to be formed such that the surface area S1 associated with the first speed V1 is wider than the surface area S2 associated with the second speed V2.

Thus, since the sliding surface 32 of the plate cam 31 is determined such that the area S1 associated with the first speed V1 is wider than the area S2 associated with the second speed V2, the electrical steering lock device 30 of the second embodiment takes the form of a cam structure that is suited to be used for high load condition through the use of the area S1 (an area in which the lock shaft 15 remains in the lock groove 13) associated with the first speed V1. In other words, the sliding surface 32 can be set to be narrow in the area S2 associated with the second speed V2, it is advantageous for the plate cam 31 to be formed in a compact structure.

According to the present invention, the protruding and retracting speeds at which the lock shaft moves are set in a way to allow the first speed, associated with the inside of the lock groove, to be lower than the second speed associated with the outside of the lock groove, enabling the lock shaft to disengage from the lock groove to the outside thereof with increased torque. This enables the lock shaft to reliably disengage from the lock groove without causing the drive unit to be largely sized. Also, with the present invention, it does not matter if the first speed and the second speed are necessarily fixed.

Also a retracting force of the lock shaft to be applied by the drive unit is set using the cam mechanism, the present invention may be altered such that the retracting force of the lock shaft is set using output control of the drive unit per se.

As set forth above, according to the present invention, pulling the lock shaft out from the inside of the lock groove to the outside thereof with increased torque enables the lock shaft to reliably disengage from the lock groove.

Further, according to the present invention, due to the presence of the cam mechanism, comprised of the cam follower and the drive member, by which the first speed associated with the inside of the lock groove is lower than the second speed associated with the outside of the lock groove, the invention defined in Claim 1 can be realized in a simplified structure without causing the drive unit to be largely sized.

Besides, since the sliding surface between the drive member and the cam follower includes an area associated with the first speed that is set to be wider than another area associated with the second speed, the present invention has advantageous effects as mentioned above and, in addition, makes it possible to provide a cam structure suited for a high load condition occurring in the area (at a region in which the lock shaft remains in the lock groove) associated with the first speed. In other words, since the present invention makes it possible to set the sliding surface to be narrow in the area associated with the second speed while rendering the structure to be suited for high load, an advantage results in the formation of the drive member formed in a compact structure.

Although the present invention has been described above by reference to certain embodiments of the invention, the invention is not limited to the embodiments described above and modifications will occur to those skilled in the art, in light of the teachings. The scope of the invention is defined with reference to the following claims.

## Claims

1. An electrical steering lock device (10,30) comprising:
a lock shaft (15) operative to protrude into and retract from a lock groove (13), formed on a steering shaft (11), such that the lock shaft (15) assumes a protruding position to engage with the lock groove (13) for blocking rotation of the steering shaft (11) while assuming a retracting position to disengage from the lock groove (13) for unlocking rotation of the steering shaft (11);
a drive unit (21) for protruding and retracting the lock shaft (15), and
a drive member (17,31) linked with the drive unit (21) in engagement with the lock shaft (15), which serves as a cam follower (15), to protrude and retract the lock shaft (15) with respect to the lock groove (13), wherein
the drive member includes a plate cam (31) having a cam surface with a contour shape to allow the lock shaft (15) to move at a first speed, at which the lock shaft (15) moves from inside the lock groove (13), to be slower than a second speed, at which the lock shaft (15) moves outside the lock groove (13), and wherein
a surface area of a sliding surface (32) between the drive member (17, 31) and the cam follower (15) includes a first surface area (S1) associated with the first speed (V1) and a second surface area (S2) associated with the second speed (V2) which is narrower than the surface area (S1).

2. The electrical steering lock device according to claim 1, wherein
a retracting force, occurring when the lock shaft (15) is retracted from the lock groove (13) by the drive unit (21), is set such that the retracting force, occurring when the lock shaft (15) is moved inside the lock groove (13), is set to be greater than that occurring when the lock shaft (15) is moved outside the lock groove (13).

3. The electrical steering lock device according to claim 1, further comprising:
a steering-lock prevention device (25) cooperating with the lock shaft (15) and operative to restrict unintentional movement of the lock shaft (15) toward the protruding position.

4. The electrical steering lock device according to claim 3, wherein
the lock shaft (15) includes an engaging portion (15a); and
the steering-lock prevention device (25) includes a lock member selectively engageable with the engaging portion (15a) of the lock shaft (15) to block unintentional locking movement of the lock shaft (15).

5. The electric steering lock device according to claim 1, wherein
the plate cam (31) is formed by overlapping a first plate segment (31a) and a second plate segment (31 b), which have different contour shapes, and wherein
the first surface area (S1) associated with the first speed (V1) includes cam surfaces of the first and second plate segments, and wherein
the second surface area (S2) associated with the second speed (V2) includes a cam surface of the second plate segment (31 b).

## Patentansprüche

1. Elektrische Lenkschlossvorrichtung (10, 30), die umfasst:
einen Schließstößel (15), der in Funktion in eine Schlossnut (13), die an einer Lenkwelle (11) ausgebildet ist, so hinein ausgefahren und aus ihr heraus eingezogen wird, dass der Schließstößel (15) eine ausgefahrene Position einnimmt, in der er mit der Schlossnut (13) in Eingriff kommt, um Drehung der Lenkwelle (11) zu blockieren, während er eine eingezogene Position einnimmt, in der er sich aus der Schlossnut (13) löst, um Drehung der Lenkwelle (11) freizugeben;
eine Antriebseinheit (21), mit der der Schließstößel (15) ausgefahren und eingezogen wird, und
ein Antriebselement (17, 31), das mit der Antriebseinheit (21) in Eingriff mit dem Schließstößel (15) verbunden ist, der als ein Nockenmitnehmer (15) dient, um den Schließstößel (15) in Bezug auf die Schlossnut (13) auszufahren und einzuziehen, wobei
das Antriebselement eine Kurvenscheibe (31) enthält, die eine Kurvenfläche mit einer Konturform aufweist, die es dem Schließstößel (15) ermöglicht, sich mit einer ersten Geschwindigkeit zu bewegen, mit der sich der Schließstößel (15) aus dem Inneren der Schlossnut (13) heraus bewegt und die langsamer ist als eine zweite Geschwindigkeit, mit der sich der Schließstößel (15) außerhalb der Schlossnut (13) bewegt, und wobei
eine Flächenausdehnung einer Gleitfläche (32) zwischen dem Antriebselement (17, 31) und dem Kurveneingriffsglied (15) eine erste Flächenausdehnung (S1), die mit der ersten Geschwindigkeit (V1) zusammenhängt, und eine zweite Flächenausdehnung (S2) enthält, die mit der zweiten Geschwindigkeit (V2) zusammenhängt und schmaler ist als die erste Flächenausdehnung (S1).

2. Elektrische Lenkschlossvorrichtung nach Anspruch 1, wobei
eine Einziehkraft, die auftritt, wenn der Schließstößel (15) durch die Antriebseinheit (21) aus der Schlossnut (13) heraus eingezogen wird, so eingestellt ist, dass die Einziehkraft, die auftritt, wenn der Schließstößel (15) im Inneren der Schlossnut (13) bewegt wird, so eingestellt ist, dass sie größer ist als diejenige, die auftritt, wenn der Schließstößel (15) außerhalb der Schlossnut (13) bewegt wird.

3. Elektrische Lenkschlossvorrichtung nach Anspruch 1, die des Weiteren umfasst:
eine Lenkschlossverriegelungs-Verhinderungsvonichtung (25), die mit dem Schließstößel (15) zusammenwirkt und in Funktion unbeabsichtigte Bewegung des Schließstößels (15) auf die ausgefahrene Position zu einschränkt.

4. Elektrische Lenkschlossvorrichtung nach Anspruch 3, wobei
der Schließstößel (15) einen Eingriffsabschnitt (15a) enthält; und
die Lenkschlossverriegelungs-Verhinderungsvorrichtung (25) ein Schlosselement enthält, das selektiv mit dem Eingriffsabschnitt (15a) des Schließstößels (15) in Eingriff gebracht werden kann, um unbeabsichtigte Verriegelungsbewegung des Schließstößels (15) zu verhindern.

5. Elektrische Lenkschlossvorrichtung nach Anspruch 1, wobei
die Kurvenscheibe (31) ausgebildet wird, indem ein erstes Scheibensegment (31 a) und ein zweites Scheibensegment (31b), die unterschiedliche Konturformen haben, übereinander angeordnet werden und wobei die erste Flächenausdehnung (S1), die mit der ersten Geschwindigkeit (V1) zusammenhängt, Kurvenflächen des ersten und des zweiten Scheibensegments einschließt, und die zweite Flächenausdehnung (S2), die mit der zweiten Geschwindigkeit (V2) zusammenhängt, eine Kurvenfläche des zweiten Scheibensegments (31 b) einschließt.

## Revendications

1. Dispositif de blocage de direction électrique (10, 30) comportant :
un arbre de blocage (15) agissant de façon à dépasser dans et se rétracter d'une rainure de blocage (13), formée sur un arbre de direction (11), de telle sorte que l'arbre de blocage (15) prend une position saillante afin de s'engager dans la rainure de blocage (13) pour bloquer la rotation de l'arbre de direction (11) tout en prenant une position de rétraction afin de se désengager de la rainure de blocage (13) pour débloquer la rotation de l'arbre de direction (11) ;
une unité d'entraînement (21) destinée à faire dépasser et rétracter l'arbre de blocage (15), et
un élément d'entraînement (17, 31) lié à l'unité d'entraînement (21) en engagement avec l'arbre de blocage (15), qui sert de suiveur de came (15), de façon à faire dépasser et rétracter l'arbre de blocage (15) par rapport à la rainure de blocage (13),
l'élément d'entraînement comprend une plaque de came (31) ayant une surface de came avec une forme de contour destinée à permettre à l'arbre de blocage (15) de se déplacer à une première vitesse, à laquelle l'arbre de blocage (15) se déplace depuis l'intérieur de la rainure de blocage (13), devant être plus lente qu'une deuxième vitesse, à laquelle l'arbre de blocage (15) se déplace en dehors de la rainure de blocage (13), et
une aire d'une surface de glissement (32) entre l'élément d'entraînement (17, 31) et le suiveur de came (15) comprend une première aire (S1) associée à la première vitesse (V1) et une deuxième aire (S2) associée à la deuxième vitesse (V2) qui est plus faible que l'aire (S1).

2. Dispositif de blocage de direction électrique selon la revendication 1, dans lequel une force de rétraction, se produisant quand l'arbre de blocage (15) est rétracté de la rainure de blocage (13) par l'unité d'entraînement (21), est établie de telle sorte que la force de rétraction, se produisant quand l'arbre de blocage (15) est déplacé à l'intérieur de la rainure de blocage (13), est établie pour être plus grande que celle qui se produit quand l'arbre de blocage (15) est déplacé en dehors de la rainure de blocage (13).

3. Dispositif de blocage de direction électrique selon la revendication 1, comportant en outre :
un dispositif de prévention de blocage de direction (25) coopérant avec l'arbre de blocage (15) et agissant afin de limiter un mouvement involontaire de l'arbre de blocage (15) vers la position saillante.

4. Dispositif de blocage de direction électrique selon la revendication 3, dans lequel l'arbre de blocage (15) comprend une partie d'engagement (15a) ; et
le dispositif de prévention de blocage de direction (25) comprend un élément de blocage pouvant être engagé de manière sélective avec la partie d'engagement (15a) de l'arbre de blocage (15) afin de bloquer le mouvement de blocage involontaire de l'arbre de blocage (15).

5. Dispositif de blocage de direction électrique selon la revendication 1, dans lequel la plaque de came (31) est formée en superposant un premier segment de plaque (31a) et un deuxième segment de plaque (31 b), qui ont formes de contour différentes, et dans lequel
la première aire (S1) associée à la première vitesse (V1) comprend des surfaces de came des premier et deuxième segments de plaque, et
la deuxième aire (S2) associée à la deuxième vitesse (V2) comprend une surface de came du deuxième segment de plaque (31b).
